# EUROPÄISCHE PATENTSCHRIFT

(11) **EP 0 723 394 B1**
(45) Veröffentlichungstag und Bekanntmachung des Hinweises auf die Patenterteilung: **17.03.1999**
(21) Anmeldenummer: 94927579.6
(22) Anmeldetag: 07.09.1994
(51) Int. Cl.: A01J 5/04, A01J 5/08

(54) **MELKANLAGE**
MILKING DEVICE
INSTALLATION DE TRAITE

(30) Priorität: 20.10.1993 DE 4335699
(43) Veröffentlichungstag der Anmeldung: 31.07.1996
(73) Patentinhaber: Westfalia Separator AG, 59302 Oelde (DE)
(72) Erfinder: KÖSTER, Ludger, Lombard, IL 60148 (US); WOHLBRÜCK, Ralf, D-59302 Oelde (DE)
(86) Internationale Anmeldenummer: EP9402989
(87) Internationale Veröffentlichungsnummer: WO9510935

(56) Entgegenhaltungen:
- EP-A- 0 093 216
- DE-A- 3 419 615
- DE-A- 3 524 380

## Beschreibung

Die Erfindung betrifft eine Melkanlage mit Melkbechern, bestehend aus einer Becherhülse, einem in der Becherhülse vorgesehenen Zitzengummi und einem zwischen Becherhülse und Zitzengummi angeordneten Pulsraum, der über eine Pulsleitung und einen Pulsator abwechselnd mit Unterdruck und Atmosphärendruck beaufschlagbar ist, wobei der zeitliche Verlauf des Druckwechsels durch den Querschnitt eines Luftkanals, durch den die Luftströmung vom bzw. zum Pulsraum erfolgt, bestimmt wird.

Der Druckwechsel im Pulsraum durchläuft die vier Phasen Evakuierungsphase, Vakuumsphase, Belüftungsphase und Druckphase. Bei hohem Milchfluß ist bekanntermaßen der Unterdruck im Pulsraum in der Vakuumphase höher als im Innenraum des Zitzengummis. Dadurch wird der Zitzengummi in der Vakuumphase aufgebläht. Diese Tendenz wird als "Balooning" bezeichnet. Insbesondere bei der Verwendung hochelastischer Zitzengummi, die für eine schonende Zitzenbehandlung vorteilhaft sind, prallt dieser aus der vorgespannten Lage in der Belüftungsphase auf die Zitze zurück. Dies kann zu Euterschäden führen.

Aus der DE 35 24 380 A1 ist beispielsweise eine Melkanlage bekannt, bei der die Geschwindigkeit des Druckwechsels in der Evakuierungsphase und in der Belüftungsphase durch den Querschnitt desselben Druckkanals bestimmt wird. Dieser Querschnitt ist so ausgelegt, daß eine schnelle Evakuierung des Pulsraumes ermöglicht wird. In der Belüftungsphase erfolgt daher ein entsprechend schneller Druckaufbau, der den vorgenannten Effekt des Aufpralls begünstigt.

Der Erfindung liegt die Aufgabe zugrunde, die Melkanlage so auszubilden, daß eine schonende Behandlung der Zitzen erfolgt.

Diese Aufgabe wird bei einer gattungsgemäßen Melkanlage dadurch gelöst, daß dem Luftkanal ein Bypasskanal zugeordnet ist, der mit einem Absperrorgan versehen ist, das bei einer Luftströmung vom Pulsraum geöffnet und bei einer Luftströmung zum Pulsraum geschlossen ist.

Der Luftkanal ist so ausgelegt, daß in der Belüftungsphase der Druckaufbau so langsam erfolgt, daß ein Aufprall des Zitzengummis auf die Zitze des Tieres vermieden wird. Durch entsprechende Auslegung des Bypasskanals kann dabei der Druckabbau in der Evakuierungsphase unverändert schnell erfolgen. Dies ermöglicht den Einsatz weicher Zitzengummis, die eine sanfte Zitzenmassage bewirken.

Bei einer vorteilhaften Ausgestaltung ist das Absperrorgan als Rückschlagventil ausgebildet, das nur eine Luftströmung vom Pulsraum zuläßt. Dadurch wird auf einfache Weise die Strömungsgeschwindigkeit in der Evakuierungsphase und der Belüftungsphase auf die unterschiedlichen Werte einstellbar.

Bei einer weiteren vorteilhaften Ausgestaltung ist das Absperrorgan durch eine Fremdsteuerung betätigbar. In diesem Fall kann der Druckwechsel in der Belüftungsphase durch Zeitpunkt und Dauer der Aktivierung des Ventils verändert werden.

Weitere vorteilhafte Ausgestaltungen sind in den restlichen Unteransprüchen wiedergegeben.

Die Aufgabe kann bei einer gattungsgemäßen Melkanlage auch dadurch gelöst werden, daß der Luftkanal als Wirbelkammer ausgebildet ist, die mit einem tangentialen und einem zentrischen Anschlußstutzen versehen ist. Derartige Wirbelkammern haben bei Durchströmung über den tangentialen Anschlußstutzen einen höheren Strömungswiderstand als bei einer Durchströmung über den zentrischen Anschlußstutzen. Dies wird bewirkt durch den Luftwirbel, der bei tangentialer Einströmung in der Wirbelkammer erzeugt wird. Bei entsprechender Anordnung kann dadurch ebenfalls ein langsamer Druckaufbau im Pulsraum erzielt werden, während der Druckabbau wesentlich schneller erfolgen kann.

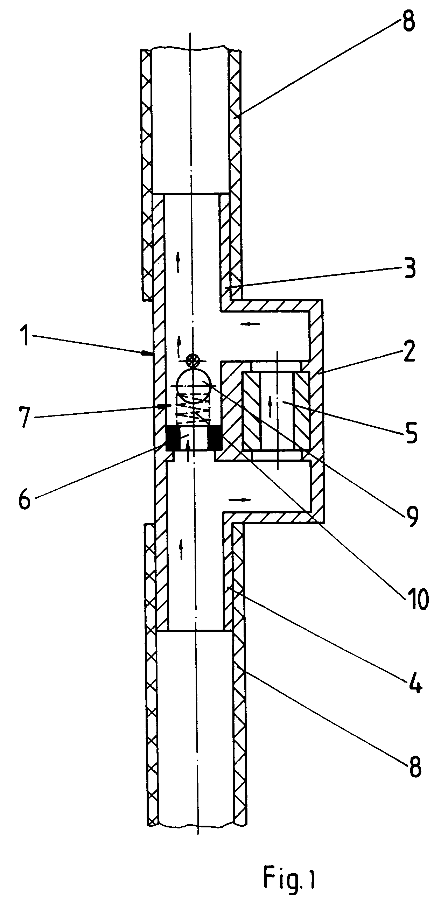

Ausführungsbeispiele der Erfindung sind in der Zeichnung dargestellt und werden nachstehend näher erläutert. Es zeigt
- Fig. 1: ein Ventilgehäuse mit einem Luftkanal und einem Bypasskanal,
- Fig. 2: einen als Wirbelkammer ausgebildeten Luftkanal,
- Fig. 3: die Ansicht "X" gemäß Fig. 2.

Mit 1 ist in der Fig. das Ventil bezeichnet, dessen Ventilgehäuse 2 mit einem ersten und zweiten Anschlußstutzen 3 und 4 versehen ist. Im Ventilgehäuse 2 ist ein Luftkanal 5 und ein Bypasskanal 6 vorgesehen, dem ein Absperrorgan 7 zugeordnet ist. Über eine Pulsleitung 8, die im Bereich des Ventils 1 geteilt ist, steht der erste Anschlußstutzen 3 mit einem Pulsator und der zweite Anschlußstutzen 4 mit einem Pulsraum eines Melkbechers in Verbindung. Das Absperrorgan 7 besitzt einen Ventilkörper 9, der durch eine Druckfeder 10 im öffnenden Sinne beaufschlagt ist.

In der Evakuierungsphase strömt die Luft aus dem Pulsraum eines nicht dargestellten Melkbechers über die Pulsleitung 8 und den zweiten Anschlußstutzen 4, den Luftkanal 5 und den Bypasskanal 6, dessen Absperrorgan 7 durch die Luftströmung selbsttätig öffnet, zum ersten Anschlußstutzen 3, der über die Pulsleitung 8 mit einem nicht dargestellten Pulsator verbunden ist. In der Belüftungsphase erfolgt die Luftströmung in der umgekehrten Richtung, wobei das Absperrorgan 7 selbsttätig schließt. Während der Evakuierungsphase steht somit ein wesentlich größerer Querschnitt für die Luftströmung zur Verfügung als während der Belüftungsphase. Dadurch wird eine schonende Massage der Zitzen gewährleistet. Die Druckfeder 10 ist so ausgelegt, daß der Ventilkörper 9 gegen Ende der Belüftungsphase, wenn der Unterdruck im Pulsraum abgebaut ist, nach oben gedrückt wird. Der Bypasskanal 6 ist somit schon vor Ende der Belüftungsphase wieder geöffnet, wodurch eine gute Belüftung des Pulsraumes erreicht wird. Außerdem ist der Ventilkörper 9 dann schon bei Beginn der folgenden Evakuierungsphase in der gewünschten Stellung. Durch die Druckfeder 10 wird weiterhin erreicht, daß bei Pulsatoren, die zu Beginn des Melkvorganges zwecks Stimulation der Zitzen mit einer stark erhöhten Taktzahl arbeiten, der Bypasskanal 6 geöffnet bleibt, weil die geringe Luftströmung in dieser Phase nicht ausreicht, die Federkraft zu überwinden.

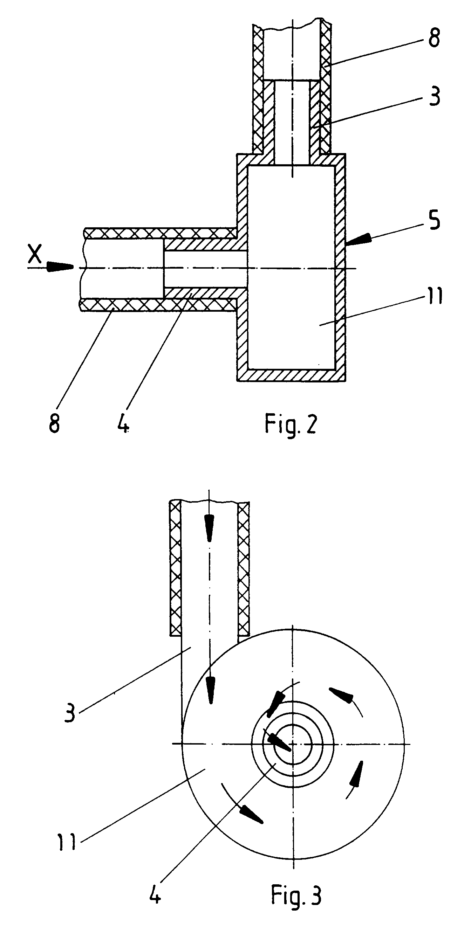

Bei der Ausführung gemäß der Fig. 2 ist der Luftkanal 5 als Wirbelkammer 11 ausgebildet, die mit einem tangentialen Anschlußstutzen 3 und einem zentrischen Anschlußstutzen 4 versehen ist. Der tangentiale Anschlußstutzen 3 steht mit einem Pulsator und der zentrische Anschlußstutzen 4 mit dem Pulsraum eines Melkbechers in Verbindung. In der Evakuierungsphase strömt die Luft aus dem Pulsraum des Melkbechers über die Pulsleitung 8 und dem zentrischen Anschlußstutzen 4 in das Zentrum der Wirbelkammer 11 und von dort über den tangentialen Anschlußstutzen 3 und die Pulsleitung 8 zum Pulsator. Da bei zentrischer Einströmung in die Wirbelkammer 11 ein geringerer Strömungswiderstand vorhanden ist, erfolgt der Druckabbau im Pulsraum sehr schnell. In der Belüftungsphase erfolgt die Luftströmung in der umgekehrten Richtung über den Anschlußstutzen 3 tangential in die Wirbelkammer 11 und von dort über den zentrischen Anschlußstutzen 4 und die Pulsleitung 8 zum Pulsraum eines Melkbechers. Durch die tangentiale Zuführung und den dadurch erzeugten Luftwirbel entsteht ein hoher Strömungswiderstand, so daß der Druckaufbau im Pulsraum des Melkbechers entsprechend langsam erfolgt.

Aus der Fig. 3 ist die tangentiale Anordnung des Anschlußstutzen 3 und die zentrische Anordnung des Anschlußstutzen 4 an die Wirbelkammer 11 ersichtlich.

## Patentansprüche

1. Melkanlage mit Melkbechern, bestehend aus einer Becherhülse, einem in der Becherhülse vorgesehenen Zitzengummi und einem zwischen Becherhülse und Zitzengummi angeordneten Pulsraum, der über eine Pulsleitung (8) und einen Pulsator abwechselnd mit Unterdruck und Atmosphärendruck beaufschlagbar ist, wobei der zeitliche Verlauf des Druckwechsels durch den Querschnitt eines Luftkanals (5), durch den die Luftströmung vom bzw. zum Pulsraum erfolgt, bestimmt wird, **dadurch gekennzeichnet**, daß dem Luftkanal (5) ein Bypasskanal (6) zugeordnet ist, der mit einem Absperrorgan (7) versehen ist, das bei einer Luftströmung vom Pulsraum geöffnet und bei einer Luftströmung zum Pulsraum geschlossen ist.

2. Melkanlage nach Anspruch 1, dadurch gekennzeichnet, daß das Absperrorgan (7) als Rückschlagventil ausgebildet ist.

3. Melkanlage nach Anspruch 1, dadurch gekennzeichnet, daß das Absperrorgan (7) elektrisch betätigbar ist.

4. Melkanlage nach Anspruch 1 oder 2, dadurch gekennzeichnet, daß der Luftkanal (5) und der Bypasskanal (6) in einem gemeinsamen Ventilgehäuse (2) vorgesehen sind.

5. Melkanlage nach einem der Ansprüche 1 bis 3, dadurch gekennzeichnet, daß das Ventilgehäuse (2) in der Pulsleitung (8) angeordnet ist.

6. Melkanlage mit Melkbechern, bestehend aus einer Becherhülse, einem in der Becherhülse vorgesehenen Zitzengummi und einem zwischen Becherhülse und Zitzengummi angeordneten Pulsraum, der über eine Pulsleitung (8) und einen Pulsator abwechselnd mit Unterdruck und Atmosphärendruck beaufschlagbar ist, wobei der zeitliche Verlauf des Druckwechsels durch den Querschnitt eines Luftkanals (5), durch den die Luftströmung vom bzw. zum Pulsraum erfolgt, bestimmt wird, **dadurch gekennzeichnet**, daß der Luftkanal (5) als Wirbelkammer (11) ausgebildet ist, die mit einem tangentialen Anschlußstutzen (3) und einem zentrischen Anschlußstutzen (4) versehen ist.

## Claims

1. Milking installation with teat cups consisting of a cup, a cup liner and a pulsation chamber situated between cup and liner which can be alternately supplied with vacuum and atmospheric pressure via a pulsation line (8) and a pulsator, whereby the duration of the pressure alternation is determined by the cross-section of an air channel (5), through which the air flow to and from the pulsation chamber takes place, **characterised in that** the air channel (5) is allocated a bypass channel (6) which is provided with a shut-off device (7) which is open when air flows from the pulsation chamber and closed when air flows to the pulsation chamber.

2. Milking installation according to claim 1, characterised in that the shut-off device (7) is designed as a non-return valve.

3. Milking installation according to claim 1, characterised in that the shut-off device (7) can be electrically actuated.

4. Milking installation according to claim 1 or 2, characterised in that the air channel (5) and the bypass channel (6) are incorporated in a common valve housing (2).

5. Milking installation according to one of the claims 1 to 3, characterised in that the valve housing (2) is located in the pulsation line (8).

6. Milking installation with teat cups consisting of a cup, a cup liner and a pulsation chamber situated between cup and liner which can be alternately supplied with vacuum and atmospheric pressure via a pulsation line (8) and a pulsator, whereby the duration of the pressure alternation is determined by the cross-section of an air channel (5), through which the air flow to and from the pulsation chamber takes place, **characterised in that** the air channel (5) is designed as a turbulence chamber (11) which is provided with a tangential connection piece (3) and a centric connection piece (4).

## Revendications

1. Installation de traite avec gobelets trayeurs constitués par un gobelet métallique et par un manchon trayeur ainsi que d'une chambre de pulsation disposée entre le gobelet métallique et le manchon trayeur, ladite chambre pouvant recevoir alternativement du vide ou de la pression atmosphérique grâce à une ligne de pulsation (8) et et à un pulsateur, le rythme des alternances de pression étant déterminé par la section d'un canal d'air (5) assurant le passage d'air à partir ou vers la chambre de pulsation, **caractérisée en ce que**, au canal d'air (5), il est attribué un canal bipasse (6) muni d'un organe d'arrêt (7) qui est ouvert quand il y a un écoulement d'air à partir de la chambre de pulsation et qui est fermé quand il y a un écoulement d'air vers la chambre de pulsation.

2. Installation de traite selon revendication 1, caractérisée en ce que l'organe d'arrêt (7) est conçu en tant que clapet anti-retour.

3. Installation de traite selon revendication 1, caractérisée en ce que l'organe d'arrêt (7) peut être actionné électriquement.

4. Installation de traite selon l'une des revendications 1 ou 2, caractérisé en ce que le canal d'air (5) et le canal bipasse (6) sont disposés dans un corps de vanne (2) commun.

5. Installation de traite selon l'une des revendications 1 à 3, caractérisée en ce que le corps de vanne (2) est incorporé dans la ligne de pulsation (8).

6. Installation de traite avec gobelets trayeurs constitués par un gobelet métallique et par un manchon trayeur ainsi que d'une chambre de pulsation disposée entre le gobelet métallique et le manchon trayeur, ladite chambre pouvant recevoir alternativement du vide ou de la pression atmosphérique grâce à une ligne de pulsation (8) et et à un pulsateur, le rythme des alternances de pression étant déterminé par la section d'un canal d'air (5) assurant le passage d'air à partir ou vers la chambre de pulsation, **caractérisée en ce que** le canal d'air (5) est conçu en tant que chambre de tourbillonnement (11) qui est munie d'un embout de raccordement tangentiel (3) et d'un embout de raccordement central (4).
